# EUROPÄISCHE PATENTANMELDUNG

(11) **EP 1 184 535 A2**
(43) Veröffentlichungstag der Anmeldung: **06.03.2002**
(21) Anmeldenummer: 01810806.8
(22) Anmeldetag: 20.08.2001
(51) Int. Cl.: E21B 10/58, B23B 51/02

(54) **Gesteinsbohrer**

(30) Priorität: 04.09.2000 DE 10043428
(71) Anmelder: HILTI Aktiengesellschaft, 9494 Schaan (LI)
(72) Erfinder: Hauptmann, Udo, 86899 Landsberg/Lech (DE)
(74) Vertreter: Wildi, Roland

(57) **Zusammenfassung**

Ein Gesteinsbohrer mit zumindest einem Hartstoffeinsatz (2) mit zumindest zwei aus Hartstoff bestehenden und sich radial zu der Bohrerachse (A) erstreckenden Schneiden (3, 7), wobei zumindest zwei Schneiden (3, 7) in einem radialen Bereich von 20% bis 50% ihres Bohrradius jeweils eine axiale Aussparung (4) aufweisen, und die um die Bohrerachse (A) rotierenden Schneiden (3, 7) sich mit ihren Schneidkanten in ihrer Gesamtheit lückenlos über den gesamten Bohrradius erstrecken.

## Beschreibung

Die Erfindung bezeichnet einen Gesteinsbohrer zur abrasiven Bearbeitung von Gestein oder gesteinsähnlichem Material durch eine bezüglich der Bohrerachse zumindest teilweise drehende und schlagende Bewegung mit einem Hartstoffeinsatz.

Übliche Gesteinsbohrer weisen einen, als Hartstoffplatte oder als Vollhartstoffkopf ausgebildeten, Hartstoffeinsatz auf, welcher im Werkzeugkopf befestigt ist, an den sich ein Schaft, oft mit einem wendelförmigen Wendelgang, anschliesst, welcher schliesslich in einem Einsteckbereich zur Aufnahme in einem Werkzeuggerät endet.

Beim Bohren mit Schlag- und Hammerbohrern überlagern sich zwei Abbauprinzipien:
- durch axial wirkende Schlagenergie verursachtes Meissein der Bohrerschneiden, das versetzt in definierten Umsetzwinkeln erfolgt und den Untergrund zu Chips zertrümmert
- Abfräsen der Chips durch Rotation der Schneiden um den Bohrermittelpunkt unter axialer Vorschubkraft

Die auf den Untergrund wirkende Schlagenergie teilt sich hierbei auf die am Werkzeugkopf vorhandenen Schneiden auf, d.h., je mehr Schneiden im Einsatz sind bzw. je länger die im Eingriff befindlichen Schneiden sind, je weniger Energie steht zur Verfügung, um Teile aus dem Untergrundmaterial herauszumeisseln. Mehrere Schneiden am Umfang verteilt bedeutet jedoch auch gleichzeitiger Meisselabbau an mehreren Stellen im Bohrlochquerschnitt. Zum anderen ist eine Schneidenpräsenz über den gesamten Bohrradius des Bohrers erforderlich, um die Schneiden-Fräswirkung über den vollen Bohrlochquerschnitt zu gewährleisten und ein Bohrloch ohne verbleibenden Bohrerkern mit einem definierten Durchmesser zu erzeugen. Bei der Dimensionierung der Bohrerschneiden ist zur Optimierung des Chipabtrags somit die Wechselwirkung beider Abbauprinzipien zu berücksichtigen.

Nach der US2673714 bildet eine Schneidplatte für ein Bohrwerkzeug zwei dachförmig geneigte Schneidkanten aus, wobei eine Schneidkante mit einer Aussparung versehen ist. Die verbleibende Schneidkante erstreckt sich lückenlos über den gesamten Bohrradius des Bohrers.

Nach der DE2523201 weist eine auswechselbare Schneidplatte eines spanend Material abtragenden Metallbohrers zwei dachförmig geneigte Schneidkanten auf, wobei beide Schneidkanten durch radial punktförmige Aussparungen in verschiedenen radialen Bereichen unterbrochen sind und die um die Bohrerachse rotierenden Schneidkanten sich in ihrer Gesamtheit lückenlos über den gesamten Bohrradius erstrecken. Die, zum Abreissen des Spanes ausgelegten, radial punktförmigen Aussparungen der Schneidkante führen nicht zu einer Verringerung der Schneidenlängen und somit zu einer effizienteren Ausnutzung der Schlagenergie für eine axial schlagende Beanspruchung zum Meisseln.

Die Aufgabe der Erfindung besteht in der Realisierung eines Gesteinsbohrers mit auf optimalen Chipabtrag dimensionierten Schneiden.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist der Werkzeugkopf eines Gesteinsbohrers zumindest zwei aus Hartstoff bestehende und sich radial zu einer Bohrerachse erstreckende Schneiden auf, wobei zumindest zwei Schneiden in einem radialen Bereich von 20% bis 50% ihrer Bohrradien eine axiale Aussparung in den Schneidkanten aufweisen, und die um die Bohrerachse rotierenden Schneidkanten sich in ihrer Gesamtheit lückenlos über den gesamten Bohrradius erstrecken.

Vorteilhaft bildet ein gemeinsamer Hartstoffeinsatz die durch die Aussparung unterbrochenen Schneidkantenbereiche aus, wodurch diese biegesteif und fest miteinander verbunden sind und weiter vorteilhaft der radiale Bereich der Aussparung zur Befestigung des Hartstoffeinsatzes am Werkzeugkopf dient.

Als Hartstoffeinsatz sind sowohl flache Hartstoffplatten als auch kompakte Vollhartstoffköpfe vorteilhaft verwendbar, wodurch bewährte Lösungen übernommen werden können.

Vorteilhaft beträgt die Gesamtheit der, bei um die Bohrerachse rotierenden Schneiden, von zumindest einer Aussparung erzeugten Radialaussparungsbereiche 40% bis 60% der gesamten radialen Bohrradien, wodurch die Schlagenergie konzentrierter in den Untergrund eingeleitet werden kann.

Vorteilhaft sind die radial ausgesparten Bereiche einzelner Schneiden unterschiedlich radial positioniert, ohne gemeinsame Radialaussparungsbereiche, bei um die Bohrerachse rotierenden Schneiden, abzudecken, wodurch zu gering ermüdete Radialaussparungsbereiche im Untergrund vermieden werden.

Vorteilhaft weisen die, bei um die Bohrerachse rotierenden Schneiden, von keiner Aussparung unterbrochenen Radialschneidbereiche jeweils einen radialen Bereich von 20% bis 50% der Bohrradien auf, wodurch bevorzugte Radialschneidbereiche im Untergrund für die Zertrümmerung in Chips ausgebildet werden.

Vorteilhaft sind Radialschneidbereiche und Radialaussparungsbereiche alternierend angeordnet, wobei jeder radiale Bereich 20% bis 35% der Bohrradien aufweist, wodurch eine gleichmässige Verteilung der Radialschneidbereiche im Untergrund für die Zertrümmerung in Chips ausgebildet wird.

Vorteilhaft weist der Werkzeugkopf mehr als zwei Schneiden auf, vorzugsweise drei, wodurch eine radiale Führung des Werkzeugkopfes im Bohrloch erzielt wird.

Weiter vorteilhaft sind die Schneiden bezüglich ihres Winkelabstands umfänglich gleichmässig verteilt, wodurch bei der Bearbeitung ein gleichmässiges Widerstandsdrehmoment entsteht.

Vorteilhaft ist eine Hauptschneide oder die Nebenschneiden ohne Aussparung ausgeführt, wodurch eine vollständige Ausräumung des Bohrmehls erzielt wird.

Die Erfindung wird bezüglich eines vorteilhaften Ausführungsbeispiels näher erläutert mit:
Fig. 1 als Hartstoffeinsatz eines Gesteinsbohrers
Fig. 2 als Gesteinsbohrer mit zwei Hauptschneiden
Fig. 3 als Gesteinsbohrer mit zwei Hauptschneiden und zwei Nebenschneiden
Fig. 4 als Gesteinsbohrer mit drei Hauptschneiden

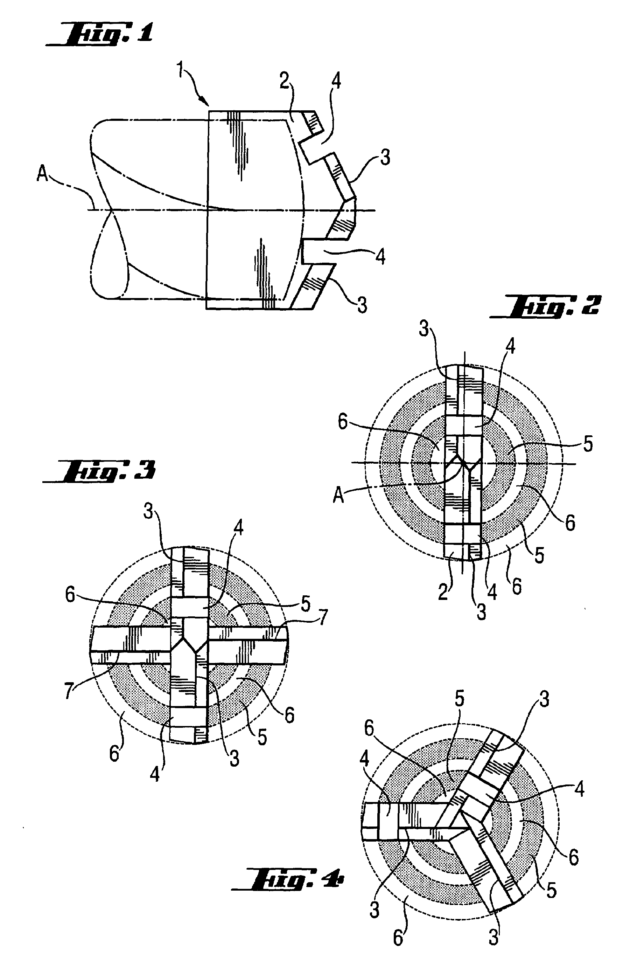

Nach Fig. 1 weist ein nicht vollständig dargestellter Werkzeugkopf 1 eines Gesteinsbohrers einen Hartstoffeinsatz 2 in Form einer Hartstoffplatte auf, welche zwei diametral zu einer Bohrerachse A angeordnete Hauptschneiden 3 ausbildet. Jede Hauptschneide 3 weist in einem radialen Bereich von 20% bzw. 25% ihrer Bohrradien jeweils eine unterschiedlich radial positionierte axiale Aussparung 4 auf, welche einmal parallel zur Bohrerachse A und einem senkrecht zur Schneidkante einer Hauptschneide 3 angeordnet ist. Ein gemeinsamer Hartstoffeinsatz 2 bildet die durch die Aussparung 4 unterbrochenen Schneidkantenbereiche aus.

Nach Fig. 2 erzeugen die Aussparungen 4 eines nicht dargestellten Gesteinsbohrers mit einem Hartstoffeinsatz 2 mit zwei Hauptschneiden 3 bei einer Rotation um die Bohrerachse A jeweils einen anderen, sich nicht überdeckenden Radialaussparungsbereich 5 und restliche Radialschneidbereiche 6, wobei die Gesamtheit der Radialaussparungsbereiche 5 etwa 40% und die Gesamtheit der Radialschneidbereiche 6 etwa 60% der gesamten Bohrradien beträgt. Die Radialschneidbereiche 6 und die Radialaussparungsbereiche 5 sind alternierend angeordnet, wobei jeder radiale Bereich etwa 20% der Bohrradien aufweist.

Nach Fig. 3 weist der Werkzeugkopf vier Schneiden auf, wobei jede Hauptschneide 3 jeweils eine und jede Nebenschneide 7 jeweils keine unterschiedlich radial positionierte Aussparung 4 aufweist.

Nach Fig. 4 weist der Werkzeugkopf drei Hauptschneiden 3 auf, die bezüglich ihres Winkelabstands umfänglich gleichmässig verteilt sind, wobei zwei Hauptschneiden 3 jeweils eine und eine Hauptschneide 3 keine unterschiedlich radial positionierte Aussparung 4 aufweist.

## Patentansprüche

1. Gesteinsbohrer zur abrasiven Bearbeitung von Gestein oder gesteinsähnlichem Material durch eine bezüglich einer Bohrerachse (A) zumindest teilweise drehende und schlagende Bewegung mit zumindest einem, in einem Werkzeugkopf (1) befestigten, Hartstoffeinsatz (2) mit zumindest zwei aus Hartstoff bestehenden und sich radial zu der Bohrerachse (A) erstreckenden Schneiden (3, 7), **dadurch gekennzeichnet, dass** zumindest zwei Schneiden (3, 7) in einem radialen Bereich von 20% bis 50% ihres Bohrradius jeweils eine axiale Aussparung (4) aufweisen, die gegenseitig derart radial versetzt angeordnet sind, dass die um die Bohrerachse (A) rotierenden Schneiden (3, 7) sich mit ihren Schneidkanten in ihrer Gesamtheit lückenlos über den gesamten Bohrradius erstrecken.

2. Gesteinsbohrer nach Anspruch 1, **dadurch gekennzeichnet, dass** ein gemeinsamer Hartstoffeinsatz (2) die durch die Aussparung (4) unterbrochenen Schneidkantenbereiche ausbildet.

3. Gesteinsbohrer nach Anspruch 1 oder Anspruch 2, **dadurch gekennzeichnet, dass** der Hartstoffeinsatz (2) als flache Hartstoffplatte oder als kompakter Vollhartstoffkopf ausgebildet ist.

4. Gesteinsbohrer nach einem der vorherigen Ansprüche, **dadurch gekennzeichnet, dass** die Gesamtheit der von zumindest einer Aussparung (4) erzeugten Radialaussparungsbereiche (5) 40% bis 60% des gesamten Bohrradius beträgt.

5. Gesteinsbohrer nach einem der vorherigen Ansprüche, **dadurch gekennzeichnet, dass** die radial ausgesparten Bereiche einzelner Schneidkanten unterschiedlich radial positioniert sind ohne gemeinsame Radialaussparungsbereiche (5) abzudecken.

6. Gesteinsbohrer nach einem der vorherigen Ansprüche, **dadurch gekennzeichnet, dass** die von keiner Aussparung (4) unterbrochenen Radialschneidbereiche (6) jeweils einen radialen Bereich von 20% bis 50% des Bohrradius aufweisen.

7. Gesteinsbohrer nach einem der vorherigen Ansprüche, **dadurch gekennzeichnet, dass** die Radialschneidbereiche (6) und Radialaussparungsbereiche (5) alternierend angeordnet sind und jeder radiale Bereich 20% bis 35% des Bohrradius aufweist.

8. Gesteinsbohrer nach einem der vorherigen Ansprüche, **dadurch gekennzeichnet, dass** der Werkzeugkopf (1) mehr als zwei Schneiden (3, 7) aufweist.

9. Gesteinsbohrer nach Anspruch 8, **dadurch gekennzeichnet, dass** die Schneiden (3, 7) bezüglich ihres Winkelabstands umfänglich gleichmässig verteilt sind.

10. Gesteinsbohrer nach Anspruch 8 oder Anspruch 9, **dadurch gekennzeichnet, dass** genau eine Hauptschneide (3) oder eine oder mehrere Nebenschneiden (7) ohne Aussparung (4) ausgeführt sind.
